# EUROPÄISCHE PATENTSCHRIFT

(11) **EP 1 683 820 B1**
(45) Veröffentlichungstag und Bekanntmachung des Hinweises auf die Patenterteilung: **03.09.2008**
(21) Anmeldenummer: 05111305.8
(22) Anmeldetag: 25.11.2005
(51) Int. Cl.: C08G 69/14, C08L 77/02, C08J 3/12, B29C 67/00

(54) **Polymerpulver mit Polyamid, Verwendung in einem formgebenden Verfahren und Formkörper, hergestellt aus diesem Polymerpulver**
Polymer powder containing polyamide, use in a shaping method and shaped body produced from this polymer powder
Poudre polymérique contenant du polyamide, utilisation dans un procédé de façonnage et corps façonné produit à partir de cette poudre polymérique

(30) Priorität: 21.01.2005 DE 102005002930
(43) Veröffentlichungstag der Anmeldung: 26.07.2006
(73) Patentinhaber: Evonik Degussa GmbH, 45128 Essen (DE)
(72) Erfinder: Monsheimer, Sylvia, 45721, Haltern am See (DE); Baumann, Franz-Erich Dr., 48249, Dülmen (DE)

(56) Entgegenhaltungen:
- WO-A-89/10947
- DE-A1- 3 441 708
- US-A- 2 907 755
- US-A- 6 136 948
- PATENT ABSTRACTS OF JAPAN Bd. 005, Nr. 140 (C-070), 4. September 1981 (1981-09-04) & JP 56 073581 A (TOAGOSEI CHEM IND CO LTD), 18. Juni 1981 (1981-06-18)

## Beschreibung

Die zügige Bereitstellung von Prototypen ist eine in der jüngsten Zeit häufig gestellte Aufgabe. Besonders geeignet sind Verfahren, die auf der Basis von pulverförmigen Werkstoffen arbeiten, und bei denen schichtweise durch selektives Aufschmelzen und Verfestigen die gewünschten Strukturen hergestellt werden. Auf Stützkonstruktionen bei Überhängen und Hinterschnitten kann dabei verzichtet werden, da das die aufgeschmolzenen Bereiche umgebende Pulverbett ausreichende Stützwirkung bietet. Ebenso entfällt die Nacharbeit, Stützen zu entfernen. Die Verfahren sind auch für die Herstellung von Kleinserien geeignet.

Die Erfindung betrifft die Verwendung eines Polymerpulvers auf Basis eines Polyamids mit mittelgroßem Lactam-Ring, hergestellt durch Polykondensation von Oenantholactam, Capryllactam, Pelargolactam oder Caprinolactam, in formgebenden Verfahren, sowie Formkörper, hergestellt durch ein schichtweise arbeitendes Verfahren, mit welchem selektiv Bereiche einer Pulverschicht aufgeschmolzen werden, unter Verwendung dieses Pulvers. Nach Abkühlen und Verfestigen der zuvor Schicht für Schicht aufgeschmolzenen Bereiche kann der Formkörper dem Pulverbett entnommen werden.

Die Selektivität der schichtweise arbeitenden Verfahren kann dabei beispielsweise über den Auftrag von Suszeptoren, Absorbern, Inhibitoren oder durch Masken oder über fokussierte Energieeinbringung, wie beispielsweise durch einen Laserstrahl, oder über Glasfasern erfolgen. Der Energieeintrag wird über elektromagnetische Strahlung erreicht.

Im Folgenden werden einige Verfahren beschrieben, mit denen aus dem erfindungsgemäßen Pulver erfindungsgemäße Formteile hergestellt werden können, ohne dass die Erfindung darauf beschränkt werden soll.

Ein Verfahren, welches besonders gut für den Zweck des Rapid Prototypings geeignet ist, ist das selektive Laser-Sintern. Bei diesem Verfahren werden Kunststoffpulver in einer Kammer selektiv kurz mit einem Laserstrahl belichtet, wodurch die Pulver-Partikel, die von dem Laserstrahl getroffen werden, schmelzen. Die geschmolzenen Partikel laufen ineinander und erstarren schnell wieder zu einer festen Masse. Durch wiederholtes Belichten von immer neu aufgebrachten Schichten können mit diesem Verfahren dreidimensionale Körper einfach und schnell hergestellt werden.

Das Verfahren des Laser-Sinterns (Rapid Prototyping) zur Darstellung von Formkörpern aus pulverförmigen Polymeren wird ausführlich in der Patentschriften US 6 136 948 und WO 96/06881 (beide DTM Corporation) beschrieben. Eine Vielzahl von Polymeren und Copolymeren wird für diese Anwendung beansprucht, wie z. B. Polyacetat, Polypropylen, Polyethylen, lonomere und Polyamid.

Andere gut geeignete Verfahren sind das SIV-Verfahren, wie in WO 01/38061 beschrieben, oder ein Verfahren wie in EP 1 015 214 beschrieben. Beide Verfahren arbeiten mit einer flächigen Infrarotheizung zum Aufschmelzen des Pulvers. Die Selektivität des Aufschmelzens wird bei ersterem durch die Auftragung eines Inhibitors, beim zweiten Verfahren durch eine Maske erreicht. Ein weiteres Verfahren ist in DE 103 11 438 beschrieben. Bei diesem wird die zum Verschmelzen benötigte Energie durch einen Mikrowellengenerator eingebracht, und die Selektivität wird durch Auftragen eines Suszeptors erreicht.

Weitere geeignete Verfahren sind solche, die mit einem Absorber arbeiten, der entweder im Pulver enthalten ist, oder der per Inkjet-Verfahren aufgetragen wird wie in DE 10 2004 012 682.8, DE 10 2004 012 683.6 und DE 10 2004 020 452.7 beschrieben.

Für die genannten Rapid-Prototyping- bzw. Rapid-Manufacturing-Verfahren (RP-oder RM-Verfahren) können pulverförmige Substrate, insbesondere Polymere, vorzugsweise ausgewählt aus Polyester, Polyvinylchlorid, Polyacetal, Polypropylen, Polyethylen, Polystyrol, Polycarbonat, Poly-(N-methylmethacrylimide) (PMMI), Polymethylmethacrylat (PMMA), lonomer, Polyamid, oder Gemische davon eingesetzt werden.

In WO-A 96/06881 wird ein für das Lasersintem geeignetes Polymerpulver beschrieben, das bei der Bestimmung des Schmelzverhaltens durch Differential Scanning Calorimetry bei einer Scanning rate von 10 bis 20 °C/min keine Überlappung des Schmelze- und Rekristallisationspeaks zeigt, einen ebenfalls durch DSC bestimmten Kristallinitätsgrad von 10 bis 90 % aufweist, ein zahlenmäßiges Mittel des Molekulargewichts Mn von 30 000 bis 500 000 hat und dessen Quotient Mw/Mn im Bereich von 1 bis 5 liegt.

DE 197 47 309 beschreibt die Verwendung eines Polyamid-12-Pulvers mit erhöhter Schmelztemperatur und erhöhter Schmelzenthalpie, welches durch Umfällung eines zuvor durch Ringöffnung und anschließende Polykondensation von Laurinlactam hergestellten Polyamids erhalten wird. Es handelt sich dabei um ein Polyamid 12. Nachteilig bei diesem Pulver ist die Ausgasung von Restmonomeren während des Bauprozesses in der Rapid Prototyping Maschine, insbesondere wenn der Bauraum während des gesamten Bauprozesses auf einer Temperatur knapp unterhalb des Schmelzpunktes des Polymeren gehalten wird. Diese Ausgasungen führen zu Sublimationen an Teilen der RP-Maschine, an denen sie sehr störend wirken können. So führt beispielsweise ein Belegen der Optik im Lasersinterprozess zu sich ändernden Baubedingungen, zum einen was die Laserleistung angeht sowie die Bauteilgenauigkeit. Ein Ablagerung an beweglichen Teilen, wie zum Beispiel an der Vorrichtung zum Pulverauftrag oder an der Vorrichtung zum Verteilen des Absorbers, Inhibitors oder Suszeptors, führt ebenfalls zu einer schlechteren Prozesssicherheit und zu ungenaueren Ergebnissen. Insbesondere bei langen Bauzeiten kann dieser Effekt zu einem Problem werden. Zur Verringerung dieses Effekts kann während der Herstellung des Polyamidpulvers ein aufwendiger und kostspieliger Zwischenschritt eingeschaltet werden, und zwar die Extraktion der Restmonomeren aus dem Polyamid in Alkohol. Besonders das Handling mit heißem Alkohol erfordert einen gewissen Aufwand.

Aufgabe der vorliegenden Erfindung war es deshalb, ein Polymerpulver bereitzustellen, welches die Erzeugung von möglichst formgetreuen Formkörpern, die eine gute Oberflächenqualität erhalten, mit möglichst gut reproduzierbaren Verarbeitungsverfahren ermöglicht. Auch ohne den Extraktionsschritt bei der Herstellung des Pulvers sollen keine nennenswerten Sublimationen in der Rapid-Prototyping-Maschine auftreten. Das Verarbeitungsverfahren ist dabei ein schichtweise arbeitendes Verfahren, bei dem selektiv Bereiche der jeweiligen Pulverschicht mittels elektromagnetischer Energie aufgeschmolzen werden und sich nach dem Abkühlen zu dem gewünschten Formkörper verbunden haben.

Überraschenderweise wurde nun gefunden, wie in den Ansprüchen beschrieben, dass sich durch die Verwendung von Polyamiden mit mittelgroßen Lactamringen durch Polykondensation und anschließende Fällungskristallisation Polymerpulver herstellen lassen, aus denen sich Formkörper durch ein schichtweise arbeitendes Verfahren, bei welchem selektiv Bereiche der jeweiligen Pulverschicht aufgeschmolzen werden, produzieren lassen, die Vorteile bezüglich der Oberflächengüte und Formtreue aufweisen und dabei bessere Eigenschaften bezüglich der Konstanz der Verarbeitung aufweisen wie aus einem Polymerpulver nach dem Stand der Technik, beispielsweise nach DE 197 47 309.

Gegenstand der vorliegenden Erfindung ist deshalb ein schichtweise arbeitendes Verfahren, bei welchem selektiv Bereiche der jeweiligen Pulverschicht aufgeschmolzen werden, welches dadurch gekennzeichnet ist, dass das Pulver zumindest ein Polyamid hergestellt durch Polykondensation von Oenantholactam, Capryllactam, Pelargolactam oder Caprinolactam, aufweist. Der Restmonomergehalt beträgt dabei ohne die Durchführung eines Extraktionsschrittes bei der Herstellung des Polyamid pulvers weniger als 1 %, bevorzugt weniger als 0,5 % und besonders bevorzugt weniger als 0,3 %.

Dabei weist das erfindungsgemäß eingesetzte Polyamidpulver einen Schmelzpunkt zwischen 190 und 220 °C auf, eine Schmelzenthalpie zwischen 50 und 150 J/g sowie eine Rekristallisationstemperatur zwischen 150 und 200 °C.

Die BET-Oberfläche liegt bei dem erfindungsgemäß verwendeten Polyamid-Pulver kleiner als 15 m²/g, bevorzugt kleiner als 10 m²/g und besonders bevorzugt kleiner als 5 m²/g. Der mittlere Korndurchmesser liegt bevorzugt zwischen 40 und 120 µm, bevorzugt zwischen 45 und 100 µm und besonders bevorzugt zwischen 50 und 70 µm.

Die BET-Oberfläche wird durch Gasadsorption nach dem Prinzip von Brunauer, Emmet und Teller ermittelt; die herangezogene Norm ist die DIN ISO 9277.

Außerdem sind Gegenstand vorliegenden Erfindung Formkörper, hergestellt durch ein schichtweise arbeitendes Verfahren, welches selektiv Bereiche der jeweiligen Schicht aufschmilzt, welche dadurch gekennzeichnet sind, dass sie zumindest ein Polyamid, hergestellt durch Polykondensation eines Lactams aus der Gruppe von Oenantholactam, Capryllactam, Pelargolactam oder Caprinolactam, und gegebenenfalls weitere Zuschlagstoffe, wie z. B. Stabilisatoren, Füllstoffe, Pigmente, Verlaufsmittel und Rieselhilfen, aufweisen.

Das erfindungsgemäß verwendete Polymerpulver hat den Vorteil, dass aus ihm durch ein schichtweise arbeitendes Verfahren, bei dem selektiv Bereiche der jeweiligen Schicht aufgeschmolzen werden, hergestellte Formkörper eine bessere Formtreue und eine bessere Oberflächenqualität gegenüber Formkörpern aus herkömmlichen Polyamidpulvern haben. Dabei weist das Pulver eine größere Prozesssicherheit auf als herkömmliche Polyamidpulver.

Die aus dem Pulver hergestellten Formkörper weisen dabei ähnlich gute mechanische Eigenschaften auf wie die aus herkömmlichen Pulver hergestellten Formkörper.

Das erfindungsgemäß verwendete Polymerpulver wird nachfolgend beschrieben, ohne dass die Erfindung darauf beschränkt sein soll.

Das Polymerpulver zum Verarbeiten in einem schichtweise arbeitenden Verfahren, bei welchem selektiv Bereiche der jeweiligen Schicht aufgeschmolzen werden, zeichnet sich dadurch aus, dass das Pulver zumindest Polyamid, hergestellt durch Polykondensation eines Lactams aus der Gruppe von Oenantholactam, Capryllactam, Pelargolactam oder Caprinolactam, aufweist.

Diese Pulver erhält man beispielsweise durch ein Verfahren nach DE 29 06 647 B1 oder durch DE 197 08 146, wobei aber bevorzugt ein Polyamid 7-, Polyamid 8-, Polyamid 9- oder Polyamid 10-Granulat als Ausgangsmaterial verwendet wird. Das Polyamid wird in Ethanol gelöst und unter bestimmten Bedingungen auskristallisiert. Gegebenenfalls wird eine Schutzsiebung und weitere Klassierung oder Kaltmahlung angeschlossen. Der Fachmann kann die Bedingungen leicht durch orientierende Vorversuche herausfinden.

Diese Polymerpulver erhält man auch durch Vermahlen, bevorzugt bei tiefen Temperaturen, wobei bevorzugt ein Polyamid 7-, Polyamid 8-, Polyamid 9-oder Polyamid 10-Granulat als Ausgangsmaterial verwendet wird. Auch eine Nachbehandlung in einem Mischer mit starker Scherung, bevorzugt bei Temperaturen oberhalb des Glaspunktes des Polymeren, kann angeschlossen werden, um das Korn abzurunden und damit die Rieselfähigkeit zu verbessern.

Überraschenderweise wurde festgestellt, dass die Nachteile, insbesondere das Ausgasen der Restmonomere während des Bauprozesses der bisherigen Pulver nach dem Stand der Technik vermieden werden kann, wenn ein Polyamid 7, ein Polyamid 8, ein Polyamid 9 oder Polyamid 10 verwendet wird. Damit kann der Bauprozess deutlich sicherer und reproduzierbarer ablaufen, und es können Formteile mit gleichbleibender Qualität und hoher Oberflächenqualität und Formtreue hergestellt werden. Der Restmonomergehalt beträgt dabei ohne die Durchführung eines Extraktionsschrittes bei der Herstellung des Polyamidpulvers weniger als 1 %, bevorzugt weniger als 0,5 % und besonders bevorzugt weniger als 0,3 %.

Die Ursache für dieses für das Rapid-Prototyping vorteilhafte Verhalten liegt in der räumlichen Anordnung der Lactame. Es handelt sich dabei um cyclische Amide, die eine Carbonamidgruppe enthalten. Die Anzahl der dazwischen liegenden CH-Gruppen kennzeichnet die Größe des Rings und auch das Polyamid, welches man nach Ringöffnung und Polykondensation erhält. So bildet Caprolactam mit 6 C-Atomen im Ring die Grundlage für ein Polyamid 6 und Laurinlactam mit 12 C-Atomen im Lactamring die Grundlage für das Polyamid 12. Sowohl das Caprolactam als auch das Laurinlactam ist gekennzeichnet durch relativ spannungsfreie Ringe. Daher sind diese relativ stabil, und es muss viel Energie hinzugefügt werden, um sie beispielsweise aus dem Polyamid als Restmonomer zu entfernen. Ein Weg dazu ist beispielsweise die aufwendige Extraktion in Alkohol. Falls es sich aber um mittelgroße Lactamringe handelt, eben Oenantholactam, Capryllactam, Pelargolactam oder auch Caprinolactam, so stehen diese unter größeren Spannungen, da die CH-Gruppen sich nicht räumlich versetzt und damit spannungsarm anordnen können. Es muss weniger Energie hinzugeführt werden, um diese Ringe aufzuspalten und zu entfernen oder in die Polyamidkette einzubauen. Das hat zur Folge, dass in dem Polyamid 7 oder Polyamid 8 oder Polyamid 9 oder Polyamid 10 die entsprechenden Lactame auch ohne zusätzlichen Extraktionsschritt kaum mehr zu finden sind. Literatur zu dem beschriebenen Phänomen ist beispielsweise im Kunststoff Handbuch Polyamide, 1998, Carl Hanser Verlag München Wien, auf den Seiten 652 und 653 zu finden, oder auch in "Thermodynamics of Polymerisation", von Bonetskaga, Skuratov et altera, Dekker, New York 1970, S. 169.

Dabei weist das erfindungsgemäß verwendete Polyamidpulver einen Schmelzpunkt zwischen 190 und 220 °C auf, eine Schmelzenthalpie zwischen 50 und 150 J/g sowie eine Rekristallisationstemperatur zwischen 150 und 200 °C. Die BET-Oberfläche liegt bei dem erfindungsgemäßen Polyamid-Pulver kleiner als 15 m²/g, bevorzugt kleiner als 10 m²/g und besonders bevorzugt kleiner als 5 m²/g. Der mittlere Korndurchmesser liegt bevorzugt zwischen 40 und 120 µm, bevorzugt zwischen 45 und 100 µm und besonders bevorzugt zwischen 50 und 70 µm.

Die verschiedenen Parameter wurden mittels DSC (Differential Scanning Calorimetry) nach DIN 53765 bzw. nach AN-SAA 0663 bestimmt. Die Messungen wurden mit einem Perkin Elmer DSC 7 mit Stickstoff als Spülgas und einer Aufheizrate sowie Abkühlrate von 20 K/min durchgeführt. Der Messbereich betrug -90 bis +250 °C.

Die Lösungsviskosität in 0,5-%iger m-Kresollösung nach DIN EN ISO 307 betrug bei den erfindungsgemäß verwendeten Polyamidpulvern bevorzugt 1,4 bis 2,1, besonders bevorzugt 1,5 bis 1,9 und ganz besonders bevorzugt zwischen 1,6 und 1,7.

Das Polyamid kann ungeregelt, teilgeregelt oder geregelt sein. Die Regelung kann entweder an der Aminoendgruppe oder an der Säureendgruppe ansetzen und mono-, di- oder mehrfunktional sein. Geeignete Regler sind beispielsweise Alkohole, Amine, Ester oder Carbonsäuren. Als Regler werden Mono-, Di- oder Polyamine oder -carbonsäuren eingesetzt. Bevorzugt wird ein ungeregeltes, teil- oder amingeregeltes Material verwendet, welches beim Bauprozess einen guten Verlauf der aufgeschmolzenen Partikel sowie gute mechanische Eigenschaften im fertigen Bauteil bewirkt.

Die Ausgangsstoffe zur Verarbeitung zu erfindungsgemäßen Pulvern werden kommerziell beispielsweise von der Acros Organic, Belgien, vertrieben. Ein geeignetes Einsatzmaterial ist z. B. Capryllactam.

Das Polymerpulver kann außerdem Hilfsstoffe und/oder Füllstoffe und/oder weitere organische oder anorganische Pigmente aufweisen. Solche Hilfsstoffe können z. B. Rieselhilfsmittel, wie z. B. gefällte und/oder pyrogene Kieselsäuren, sein. Gefällte Kieselsäuren werden zum Beispiel unter dem Produktnamen Aerosil, mit unterschiedlichen Spezifikationen, durch die Degussa AG angeboten. Vorzugsweise weist erfindungsgemäßes Polymerpulver weniger als 3 Gew.-%, vorzugsweise von 0,001 bis 2 Gew.-% und ganz besonders bevorzugt von 0,05 bis 1 Gew.-% solcher Hilfsstoffe, bezogen auf die Summe der vorhandenen Polymere, auf. Die Füllstoffe können z. B. Glas-, Metall- oder Keramikpartikel, wie z. B. Glaskugeln, Stahlkugeln oder Metallgrieß, oder Fremdpigmente, wie z. B. Übergangsmetalloxide, sein. Die Pigmente können beispielsweise Titandioxidpartikel basierend auf Rutil (bevorzugt) oder Anatas sein oder Rußpartikel.

Die Füllstoffpartikel weisen dabei vorzugsweise eine kleinere oder ungefähr gleich große mittlere Partikelgröße wie die Partikel der Polyamide auf. Vorzugsweise sollte die mittlere Partikelgröße d₅₀ der Füllstoffe die mittlere Partikelgröße d₅₀ der Polyamide um nicht mehr als 20 %, vorzugsweise um nicht mehr als 15 % und ganz besonders bevorzugt um nicht mehr als 5 % überschreiten. Die Partikelgröße ist insbesondere limitiert durch die zulässige Bauhöhe bzw. Schichtdicke in der Rapid-Prototyping/Rapid Manufacturing-Anlage.

Vorzugsweise weist erfindungsgemäß verwendbares Polymerpulver weniger als 75 Gew.-%, bevorzugt von 0,001 bis 70 Gew.-%, besonders bevorzugt von 0,05 bis 50 Gew.-% und ganz besonders bevorzugt von 0,5 bis 25 Gew.-% solcher Füllstoffe, bezogen auf die Summe der vorhandenen Polyamide, auf.

Beim Überschreiten der angegebenen Höchstgrenzen für Hilfs- und/oder Füllstoffe kann es je nach eingesetztem Füll- oder Hilfsstoff zu deutlichen Verschlechterungen der mechanischen Eigenschaften von Formkörpern kommen, die mittels solcher Polymerpulver hergestellt wurden.

Es ist ebenso möglich, herkömmliche Polymerpulver mit erfindungsgemäß eingesetzten Polymerpulvern zu mischen. Auf diese Weise lassen sich Polymerpulver mit einer weiteren Kombination von Oberflächeneigenschaften herstellen. Das Verfahren zur Herstellung solcher Mischungen kann z. B. DE 34 41 708 entnommen werden.

Zur Verbesserung des Schmelzeverlaufs bei der Herstellung der Formkörper kann ein Verlaufsmittel, wie beispielsweise Metallseifen, bevorzugt Alkali- oder Erdalkalisalze der zugrunde liegenden Alkanmonocarbonsäuren oder Dimersäuren, dem gefällten Polyamidpulver zugesetzt werden. Die Metallseifenpartikel können in die Polymerpartikel eingearbeitet werden, es können aber auch Mischungen von feinteiligen Metallseifenpartikeln und Polymerpartikeln vorliegen.

Die Metallseifen werden in Mengen von 0,01 bis 30 Gew.-%, vorzugsweise 0,5 bis 15 Gew.-%, bezogen auf die Summe der im Pulver vorhandenen Polyamide, eingesetzt. Bevorzugt wurden als Metallseifen die Natrium- oder Calciumsalze der zugrunde liegenden Alkanmonocarbonsäuren oder Dimersäuren eingesetzt. Beispiele für kommerziell verfügbare Produkte sind Licomont NaV 101 oder Licomont CaV 102 der Firma Clariant.

Zur Verbesserung der Verarbeitungsfähigkeit oder zur weiteren Modifikation des Polymerpulvers können diesem anorganische Fremdpigmente, wie z. B. Übergangsmetalloxide, Stabilisatoren, wie z. B. Phenole, insbesondere sterisch gehinderte Phenole, Verlaufs- und Rieselhilfsmittel, wie z. B. pyrogene Kieselsäuren, sowie Füllstoffpartikel zugegeben werden. Vorzugsweise wird, bezogen auf das Gesamtgewicht an Polymeren im Polymerpulver, so viel dieser Stoffe den Polymeren zugegeben, dass die für das Polymerpulver angegeben Konzentrationen für Füll- und/oder Hilfsstoffe eingehalten werden.

Gegenstand der vorliegenden Erfindung sind auch Verfahren zur Herstellung von Formkörpern durch schichtweise arbeitende Verfahren, bei denen selektiv Bereiche der jeweiligen Schicht aufgeschmolzen werden, bei denen Polymerpulver, welche dadurch gekennzeichnet sind, dass sie zumindest ein Polyamid 7, ein Polyamid 8, ein Polyamid 9 oder ein Polyamid 10, aufweisen.

Die Energie wird durch elektromagnetische Strahlung eingebracht, und die Selektivität wird beispielsweise durch Masken, Auftragung von Inhibitoren, Absorbern, Suszeptoren oder aber durch eine Fokussierung der Strahlung, beispielsweise durch Laser, eingebracht. Die elektromagnetische Strahlung umfasst den Bereich von 100 nm bis 10 cm, bevorzugt zwischen 400 nm bis 10 600 nm oder zwischen 800 und 1 060 nm. Die Quelle der Strahlung kann beispielsweise ein Mikrowellengenerator, ein geeigneter Laser, ein Heizstrahler oder eine Lampe sein, aber auch Kombinationen davon. Nach dem Abkühlen aller Schichten kann der erfindungsgemäße Formkörper entnommen werden.

Die nachfolgenden Beispiele für solche Verfahren dienen der Erläuterung, ohne die Erfindung darauf beschränken zu wollen.

Die Lasersinterverfahren sind hinlänglich bekannt und beruhen auf dem selektiven Sintern von Polymerpartikeln, wobei Schichten von Polymerpartikeln kurz einem Laserlicht ausgesetzt werden und so die Polymerpartikel, die dem Laserlicht ausgesetzt waren, miteinander verbunden werden. Durch die aufeinander folgende Versinterung von Schichten von Polymerpartikeln werden dreidimensionale Objekte hergestellt. Einzelheiten zum Verfahren des selektiven Laser-Sinterns sind z. B. den Schriften US 6 136 948 und WO 96/06881 zu entnehmen.

Andere gut geeignete Verfahren sind das SIV-Verfahren, wie es in WO 01/38061 beschrieben wird, oder ein Verfahren wie in EP 1 015 214 beschrieben. Beide Verfahren arbeiten mit einer flächigen Infrarotheizung zum Aufschmelzen des Pulvers. Die Selektivität des Aufschmelzens wird bei ersterem durch die Auftragung eines Inhibitors, beim zweiten Verfahren durch eine Maske erreicht. Ein weiteres Verfahren ist in DE 103 11 438 beschrieben. Bei diesem wird die zum Verschmelzen benötigte Energie durch einen Mikrowellengenerator eingebracht, und die Selektivität wird durch Auftragen eines Suszeptors erreicht.

Weitere geeignete Verfahren sind solche, die mit einem Absorber arbeiten, der entweder im Pulver enthalten ist, oder der per Inkjet-Verfahren aufgetragen wird wie in DE 10 2004 012 682.8, DE 10 2004 012 683.6 und DE 10 2004 020 452.7 beschrieben.

Die erfindungsgemäßen Formkörper, die durch ein schichtweise arbeitendes Verfahren, bei dem selektiv Bereiche aufgeschmolzen werden, hergestellt werden, zeichnen sich dadurch aus, dass sie zumindest ein Polyamid, hergestellt durch Polykondensation von Oenantholactam, Capryllactam, Pelargolactam oder Caprinolactam, aufweisen.

Die Formkörper können außerdem Füllstoffe und/oder Hilfsstoffe (hier gelten die Angaben wie für das Polymerpulver), wie z. B. thermische Stabilisatoren, wie z. B. sterisch gehinderte Phenolderivate, aufweisen. Füllstoffe können z. B. Glas-, Keramikpartikel und auch Metallpartikel, wie zum Beispiel Eisenkugeln, bzw. entsprechende Hohlkugeln sein. Bevorzugt weisen die erfindungsgemäßen Formkörper Glaspartikel, ganz besonders bevorzugt Glaskugeln auf. Vorzugsweise weisen erfindungsgemäße Formkörper weniger als 3 Gew.-%, besonders bevorzugt von 0,001 bis 2 Gew.-% und ganz besonders bevorzugt von 0,05 bis 1 Gew.-% solcher Hilfsstoffe, bezogen auf die Summe der vorhandenen Polymere, auf. Ebenso bevorzugt weisen erfindungsgemäße Formkörper weniger als 75 Gew.-%, bevorzugt von 0,001 bis 70 Gew.-%, besonders bevorzugt von 0,05 bis 50 Gew.-% und ganz besonders bevorzugt von 0,5 bis 25 Gew.-% solcher Füllstoffe, bezogen auf die Summe der vorhandenen Polymere, auf.

Anwendungsgebiete für diese Formkörper sind sowohl im Rapid Prototyping als auch im Rapid Manufacturing zu sehen. Mit letzterem sind durchaus Kleinserien gemeint, also die Herstellung von mehr als einem gleichen Teil, bei dem aber die Produktion mittels eines Spritzgießwerkzeugs nicht wirtschaftlich ist. Beispiele hierfür sind Teile für hochwertige PKW, die nur in kleinen Stückzahlen hergestellt werden, oder Ersatzteile für den Motorsport, bei denen neben den kleinen Stückzahlen auch der Zeitpunkt der Verfügbarkeit eine Rolle spielt. Branchen, in die die erfindungsgemäßen Teile gehen, können die Luft- und Raumfahrtindustrie sein, die Medizintechnik, der Maschinenbau, der Automobilbau, die Sportindustrie, die Haushaltswarenindustrie, Elektroindustrie und Lifestyle.

Die folgenden Beispiele sollen das erfindungsgemäß verwendete Polymerpulver sowie dessen Verwendung beschreiben, ohne die Erfindung auf die Beispiele einzuschränken.

Die Messwerte der Laserbeugung wurden mit dem Malvern Mastersizer S, Ver. 2.18, erhalten.

Die relativen Lösungsviskositäten wurden an 0,5-%igen Lösungen in m-Kresol nach ISO 307 bzw. DIN 53727 gemessen. Niedermolekulare Bestandteile wurden durch Extraktion von jeweils 10 g Granulat in 150 ml abs. Ethanol über 4 Stunden, Abfiltrieren des Granulats und anschließendes Auswiegen des eingedampften Ethanolfiltrates gravimetrisch bestimmt.

Die Erfindung soll durch die folgenden Beispiele erläutert, aber nicht eingegrenzt werden.

### Vergleichsbeispiel 1

### Polyamid 12-Granulat

In einem 2-1-Rührautoklaven aus V4A-Stahl wurden 1 000 g Laurinlactam, 10,5 g 1,12 Dodecandisäure 445 g Wasser und 0,1 g 50-%ige wässrige hypophosphorige Säure auf 280 °C unter Eigendruck (ca. 22 bar) erhitzt und nach 5 Stunden innerhalb 3 Stunden auf Atmosphärendruck entspannt. Man leitete noch 2 Stunden Stickstoff über die Schmelze. Das Reaktionsprodukt wurde als Strang ausgetragen, granuliert und bei 70 °C getrocknet.

| | |
|---|---|
| Relative Lösungsviskosität: | 1,62 |
| Extraktgehalt: | 1,26 Gew.-% |
| Schmelzpunkt (DSC): | 177 °C |
| Schmelzenthalpie: | 77 J/g |
| COOH: | 119 mmol/kg |
| NH₂: | 6 mmol/kg |

### Vergleichsbeispiel A

### Polyamid 8-Granulat

Man setzte entsprechend Vergleichsbeispiel 1 ein Gemisch aus 1 000 g Capryllactam, 0,4 g Korksäure, 440 g Wasser und 0,1 g hypophosphorige Säure zu Polyamid 8 um mit folgenden Granulateigenschaften:

| | |
|---|---|
| Relative Lösungsviskosität: | 1,62 |
| Extraktgehalt: | 0,46 Gew.-% |
| Schmelzpunkt (DSC): | 195 °C |
| Schmelzenthalpie: | 68 J/g |
| COOH: | 119 mmol/kg |
| NH₂: | 6 mmol/kg |

### Vergleichsbeispiel 2

### Umfällung von PA 12

400 g des Granulats aus Vergleichsbeispiel 1 wurden mit 2,6 I Ethanol 96-%ig, vergällt mit 2-Butanon in einem 5-I-Rührkessel, versehen mit Blattrührer, bei einer Rührerdrehzahl von 160 Upm bei 152 °C gelöst und 75 Minuten bei dieser Temperatur gehalten. Innerhalb von 40 Minuten kühlte man den Kesselinhalt auf 110 °C ab und hielt diese Temperatur 60 Minuten bei. Nach ca. 25 Minuten kam die Wärmeentwicklung, erkennbar an einer um 2K erhöhten Innentemperatur, zum Stillstand. Die Suspension wurde auf 75 °C abgekühlt und zur Trocknung (80 °C, 3 Stunden) in einen Schaufeltrockner überführt.

Man erhielt ein Pulver mit folgenden Eigenschaften:

| | |
|---|---|
| Schüttdichte: | 417 g/l |
| Korngrößenverteilung (d10/d50/d90): | 43 µm/66 µm/89 µm |
| Schmelztemperatur (DSC): | 186 °C |
| Schmelzenthalpie: | 119 J/g |
| BET-Oberfläche: | 6,8 m²/g |
| LL-Gehalt (GC): | 0,28 % |

### Vergleichsbeispiel 3

### Umfällung von extrahiertem Polyamid 12

400 g des Granulats aus Vergleichsbeispiel 1 wurden mit 1 I Ethanol in einem 2-I-Dreihalskolben 60 Minuten unter Rückfluss erhitzt und heiß abfiltriert. Das noch ethanolfeuchte Granulat wurde mit 2,6 I Ethanol 96-%ig, vergällt mit 2-Butanon in einem 5-I-Rührkessel, versehen mit Blattrührer, bei einer Rührerdrehzahl von 160 Upm bei 152 °C gelöst und 75 Minuten bei dieser Temperatur gehalten. Innerhalb von 40 Minuten kühlte man den Kesselinhalt auf 110 °C ab und hielt diese Temperatur 60 Minuten bei. Nach ca. 25 Minuten kam die Wärmeentwicklung, erkennbar an einer um 2K erhöhten Innentemperatur, zum Stillstand. Die Suspension wurde auf 75 °C abgekühlt und zur Trocknung (80 °C, 3 Stunden) in einen Schaufeltrockner überführt.

Man erhielt ein Pulver mit folgenden Eigenschaften:

| | |
|---|---|
| Schüttdichte: | 422 g/l |
| Korngrößenverteilung (d10/d50/d90): | 41 µm/68 µm/93 µm |
| Schmelztemperatur (DSC): | 187 °C |
| Schmelzenthalpie: | 125 J/g |
| BET-Oberfläche: | 7,4 m²/g |
| LL-Gehalt (GC): | 0,14 % |

### Herstellungs-Beispiel 2

### Umfällung von Polyamid 8

In Anlehnung an Vergleichsbeispiel 2 fällte man 400 g des Granulats aus Vergleichsbeispiel A mit einer Lösetemperatur von 160 °C und einer Fälltemperatur von 119 °C um.

| | |
|---|---|
| Schüttdichte: | 317 g/l |
| Korngrößenverteilung (d10/db0/d90): | 29 µm/69 µm/99 µm |
| Schmelztemperatur (DSC): | 204 °C |
| Schmelzenthalpie: | 139 J/g |
| BET-Oberfläche: | 12,8 m²/g |
| CpL-Gehalt (GC): | 0,12 % |

Anhand der Beispiele kann sehr gut erkannt werden, dass die erfindungsgemäßverwendeten Polyamidpulver einen deutlich verringerten Restmonomergehalt aufweisen als herkömmliche Polymerpulver. Dementsprechend lassen sich Bauteile mit höherer Oberflächenqualität herstellen, da weniger Sublimationen an Teilen der Rapid-Prototyping-Maschine einen besser reproduzierbaren Prozess erlauben, der für alle Bauteile gleichermaßen am Optimum gefahren werden kann.

## Patentansprüche

1. Verfahren zur Herstellung von Formkörpern durch ein schichtweise arbeitendes Verfahren, bei dem selektiv Bereiche der jeweiligen Pulverschicht durch den Eintrag elektromagnetischer Energie aufgeschmolzen werden, wobei die Selektivität durch die Auftragung von Suszeptoren, Inhibitoren, Absorbern oder durch Masken erzielt wird,
**dadurch gekennzeichnet,**
**dass** zumindest ein Polyamid, das durch Polykondensation von Oenantholactam, Capryllactam, Pelargolactam oder Caprinolactam hergestellt wird, verwendet wird.

2. Verfahren nach Anspruch 1,
**dadurch gekennzeichnet,**
**dass** die Selektivität durch die Fokussierung eines Laserstrahls erzielt wird,

3. Verfahren nach einem der vorhergehenden Ansprüche,
**dadurch gekennzeichnet,**
**dass** das Polyamidpulver durch Vermahlung erhalten wurde.

4. Verfahren nach einem der vorhergehenden Ansprüche,
**dadurch gekennzeichnet,**
**dass** das Polyamidpulver durch Fällungskristallisation erhalten wurde.

5. Verfahren nach einem der vorhergehenden Ansprüche,
**dadurch gekennzeichnet,**
**dass** es ungeregeltes Polyamid aufweist.

6. Verfahren nach einem der vorhergehenden Ansprüche,
**dadurch gekennzeichnet,**
**dass** es geregeltes Polyamid aufweist.

7. Verfahren nach einem der vorhergehenden Ansprüche,
**dadurch gekennzeichnet,**
**dass** es teilgeregeltes Polyamid aufweist.

8. Verfahren nach einem der vorhergehenden Ansprüche,
**dadurch gekennzeichnet,**
**dass** als Regler ein Mono-, Di- oder Polyamin verwendet wird.

9. Verfahren nach einem der vorhergehenden Ansprüche,
**dadurch gekennzeichnet,**
**dass** als Regler eine Mono-, Di- oder Polycarbonsäure verwendet wird.

10. Verfahren nach einem der vorhergehenden Ansprüche,
**dadurch gekennzeichnet,**
**dass** das Polyamidpulver eine Lösungsviskosität zwischen 1,4 bis 2,1 aufweist.

11. Verfahren nach einem der vorhergehenden Ansprüche,
**dadurch gekennzeichnet,**
**dass** das Polyamidpulver eine Lösungsviskosität zwischen 1,5 bis 1,9 aufweist.

12. Verfahren nach einem der vorhergehenden Ansprüche,
**dadurch gekennzeichnet,**
**dass** das Polyamidpulver eine Lösungsviskosität zwischen 1,6 bis 1,7 aufweist.

13. Verfahren nach einem der vorhergehenden Ansprüche,
**dadurch gekennzeichnet,**
**dass** das Polyamidpulver einen mittleren Korndurchmesser zwischen 40 und 120 µm aufweist.

14. Verfahren nach einem der vorhergehenden Ansprüche,
**dadurch gekennzeichnet,**
**dass** das Polyamidpulver einen BET-Oberfläche kleiner als 15 m²/g aufweist.

15. Verfahren nach einem der vorhergehenden Ansprüche,
**dadurch gekennzeichnet,**
**dass** das Polyamidpulver einen Schmelzpunkt zwischen 190 °C und 220 °C aufweist.

16. Verfahren nach einem der vorhergehenden Ansprüche,
**dadurch gekennzeichnet,**
**dass** es Hilfsstoffe und/oder Füllstoffe aufweist.

17. Verfahren nach Anspruch 16,
**dadurch gekennzeichnet,**
**dass** es als Hilfsstoff Rieselhilfsmittel aufweist.

18. Verfahren nach Anspruch 16,
**dadurch gekennzeichnet,**
**dass** es als Füllstoff Glaspartikel aufweist.

19. Verfahren nach Anspruch 16,
**dadurch gekennzeichnet,**
**dass** es als Hilfsstoff Metallseifen aufweist.

20. Verfahren nach einem der vorhergehenden Ansprüche,
**dadurch gekennzeichnet,**
**dass** es organische und/oder anorganische Pigmente aufweist.

21. Verfahren nach Anspruch 20,
**dadurch gekennzeichnet,**
**dass** es Ruß aufweist.

22. Verfahren nach Anspruch 20,
**dadurch gekennzeichnet,**
**dass** es Titandioxid aufweist.

23. Formkörper hergestellt nach einem der vorhergehenden Ansprüche,
**dadurch gekennzeichnet,**
**dass** zumindest ein Polyamid, das durch Polykondensation von Oenantholactam, Capryllactam, Pelargolactam oder Caprinolactam hergestellt wird, verwendet wird.

24. Formkörper nach einem der vorhergehenden Ansprüche,
**dadurch gekennzeichnet,**
**dass** er Polyamidpulver, welches durch Fällungskristallisation erhalten wurde, aufweist.

25. Formkörper nach einem der vorhergehenden Ansprüche,
**dadurch gekennzeichnet,**
**dass** er Polyamidpulver, welches durch Vermahlung erhalten wurde, aufweist.

26. Formkörper nach einem der vorhergehenden Ansprüche,
**dadurch gekennzeichnet,**
**dass** er ein Polyamid mit einer Lösungsviskosität zwischen 1,4 bis 2,1 aufweist.

27. Formkörper nach einem der vorhergehenden Ansprüche,
**dadurch gekennzeichnet,**
**dass** er ein Polyamid mit einer Lösungsviskosität zwischen 1,5 bis 1,9 aufweist.

28. Formkörper nach einem der vorhergehenden Ansprüche,
**dadurch gekennzeichnet,**
**dass** er ein Polyamid mit einer Lösungsviskosität zwischen 1,6 bis 1,7 aufweist.

29. Formkörper nach einem der vorhergehenden Ansprüche,
**dadurch gekennzeichnet,**
**dass** er Hilfsstoffe und/oder Füllstoffe aufweist.

30. Formkörper nach einem der vorhergehenden Ansprüche,
**dadurch gekennzeichnet,**
**dass** er als Hilfsstoff Rieselhilfsmittel aufweist.

31. Formkörper nach einem der vorhergehenden Ansprüche,
**dadurch gekennzeichnet,**
**dass** er als Füllstoff Glaspartikel aufweist.

32. Formkörper nach einem der vorhergehenden Ansprüche,
**dadurch gekennzeichnet,**
**dass** er als Hilfsstoff Metallseifen aufweist.

33. Formkörper nach einem der vorhergehenden Ansprüche,
**dadurch gekennzeichnet,**
**dass** er organische und/oder anorganische Pigmente aufweist.

34. Formkörper nach einem der vorhergehenden Ansprüche,
**dadurch gekennzeichnet,**
**dass** er Ruß aufweist.

35. Formkörper nach einem der vorhergehenden Ansprüche,
**dadurch gekennzeichnet,**
**dass** er Titandioxid aufweist.

## Claims

1. Process for the production of moldings by a layer-by-layer process in which regions of the respective pulverulent layer are selectively melted by introduction of electromagnetic energy, the selectivity being obtained by the application of susceptors, of inhibitors, or of absorbers, or via masks,
**characterized in that**
at least one polyamide is used which is prepared via polycondensation of enantholactam, caprylolactam, pelargolactam or caprinolactam.

2. Process according to Claim 1,
**characterized in that**
the selectivity is achieved by the focusing of a laser beam.

3. Process according to any of the preceding claims,
**characterized in that**
the polyamide powder has been obtained by grinding.

4. Process according to any of the preceding claims,
**characterized in that**
the polyamide powder has been obtained by precipitative crystallization.

5. Process according to any of the preceding claims,
**characterized in that** it
comprises unregulated polyamide.

6. Process according to any of the preceding claims,
**characterized in that** it
comprises regulated polyamide.

7. Process according to any of the preceding claims,
**characterized in that** it
comprises partially regulated polyamide.

8. Process according to any of the preceding claims,
**characterized in that**
the regulator used comprises a mono-, di-, or polyamine.

9. Process according to any of the preceding claims,
**characterized in that**
the regulator used comprises a mono-, di-, or polycarboxylic acid.

10. Process according to any of the preceding claims,
**characterized in that**
the polyamide powder has a solution viscosity of from 1.4 to 2.1.

11. Process according to any of the preceding claims,
**characterized in that**
the polyamide powder has a solution viscosity of from 1.5 to 1.9.

12. Process according to any of the preceding claims,
**characterized in that**
the polyamide powder has a solution viscosity of from 1.6 to 1.7.

13. Process according to any of the preceding claims,
**characterized in that**
the polyamide powder has a median grain diameter of from 40 to 120 µm.

14. Process according to any of the preceding claims,
**characterized in that**
the polyamide powder has a BET surface area smaller than 15 m²/g.

15. Process according to any of the preceding claims,
**characterized in that**
the polyamide powder has a melting point of from 190°C to 220°C.

16. Process according to any of the preceding claims,
**characterized in that** it
comprises auxiliaries and/or fillers.

17. Process according to Claim 16,
**characterized in that** it
comprises powder-flow aids as auxiliary.

18. Process according to Claim 16,
**characterized in that** it
comprises glass particles as filler.

19. Process according to Claim 16,
**characterized in that** it
comprises metal soaps as auxiliary.

20. Process according to any of the preceding claims,
**characterized in that** it
comprises organic and/or inorganic pigments.

21. Process according to Claim 20,
**characterized in that** it
comprises carbon black.

22. Process according to Claim 20,
**characterized in that** it
comprises titanium dioxide.

23. Molding prepared according to any of the preceding claims,
**characterized in that**
at least one polyamide is used which is prepared by polycondensation of enantholactam, caprylolactam, pelargolactam or caprinolactam.

24. Molding according to any of the preceding claims,
**characterized in that** it
comprises polyamide powder which has been obtained by precipitative crystallization.

25. Molding according to any of the preceding claims,
**characterized in that** it
comprises polyamide powder which has been obtained by grinding.

26. Molding according to any of the preceding claims,
**characterized in that** it
comprises a polyamide with a solution viscosity of from 1.4 to 2.1.

27. Molding according to any of the preceding claims,
**characterized in that** it
comprises a polyamide with a solution viscosity of from 1.5 to 1.9.

28. Molding according to any of the preceding claims,
**characterized in that** it
comprises a polyamide with a solution viscosity of from 1.6 to 1.7.

29. Molding according to any of the preceding claims,
**characterized in that** it
comprises auxiliaries and/or fillers.

30. Molding according to any of the preceding claims,
**characterized in that** it
comprises powder-flow aids as auxiliary.

31. Molding according to any of the preceding claims,
**characterized in that** it
comprises glass particles as filler.

32. Molding according to any of the preceding claims,
**characterized in that** it
comprises metal soaps as auxiliary.

33. Molding according to any of the preceding claims,
**characterized in that** it
comprises organic and/or inorganic pigments.

34. Molding according to any of the preceding claims,
**characterized in that** it
comprises carbon black.

35. Molding according to any of the preceding claims,
**characterized in that** it
comprises titanium dioxide.

## Revendications

1. Procédé en vue de la fabrication de corps moulés par un procédé de travail par couches, lors duquel des domaines de chaque couche de poudre sont sélectivement fondus par l'apport d'énergie électromagnétique, la sélectivité étant obtenue par l'application d'agents suscepteurs, d'agents inhibiteurs, d'agents absorbeurs ou par des masques, **caractérisé en ce que** l'on utilise au moins un polyamide qui a été fabriqué par polycondensation d'oenantholactame, de caprylolactame, de pélargolactame ou de caprinolactame.

2. Procédé selon la revendication 1, **caractérisé en ce que** la sélectivité est obtenue par la focalisation d'un rayon laser.

3. Procédé selon l'une quelconque des revendications précédentes, **caractérisé en ce que** la poudre de polyamide a été obtenue par mouture.

4. Procédé selon l'une quelconque des revendications précédentes, **caractérisé en ce que** la poudre de polyamide a été obtenue par cristallisation à précipitation.

5. Procédé selon l'une quelconque des revendications précédentes, **caractérisé en ce qu'**il présente un polyamide non régulé.

6. Procédé selon l'une quelconque des revendications précédentes, **caractérisé en ce qu'**il présente un polyamide régulé.

7. Procédé selon l'une quelconque des revendications précédentes, **caractérisé en ce qu'**il présente un polyamide partiellement régulé.

8. Procédé selon l'une quelconque des revendications précédentes, **caractérisé en ce que** l'on utilise, en tant qu'agent régulateur, une monoamine, une diamine ou une polyamine.

9. Procédé selon l'une quelconque des revendications précédentes, **caractérisé en ce que** l'on utilise, en tant qu'agent régulateur, un monoacide, un diacide ou un polyacide.

10. Procédé selon l'une quelconque des revendications précédentes, **caractérisé en ce que** la poudre de polyamide présente une viscosité de solution comprise entre 1,4 et 2,1.

11. Procédé selon l'une quelconque des revendications précédentes, **caractérisé en ce que** la poudre de polyamide présente une viscosité de solution comprise entre 1,5 et 1,9.

12. Procédé selon l'une quelconque des revendications précédentes, **caractérisé en ce que** la poudre de polyamide présente une viscosité de solution comprise entre 1,6 et 1,7.

13. Procédé selon l'une quelconque des revendications précédentes, **caractérisé en ce que** la poudre de polyamide présente un diamètre de grain compris entre 40 et 120 µm.

14. Procédé selon l'une quelconque des revendications précédentes, **caractérisé en ce que** la poudre de polyamide présente un surface BET inférieure à 15 m²/g.

15. Procédé selon l'une quelconque des revendications précédentes, **caractérisé en ce que** la poudre de polyamide présente un point de fusion compris entre 190°C et 220°C.

16. Procédé selon l'une quelconque des revendications précédentes, **caractérisé en ce qu'**il présente des adjuvants et/ou des charges.

17. Procédé selon la revendication 16, **caractérisé en ce qu'**il présente, en tant qu'adjuvant, un agent de ruissellement.

18. Procédé selon la revendication 16, **caractérisé en ce qu'**il présente, en tant qu'adjuvant, un agent de ruissellement.

19. Procédé selon la revendication 16, **caractérisé en ce qu'**il présente, en tant qu'adjuvant, des savons métalliques.

20. Procédé selon l'une quelconque des revendications précédentes, **caractérisé en ce qu'**il présente des pigments organiques et/ou inorganiques.

21. Procédé selon la revendication 20, **caractérisé en ce qu'**il présente du noir de fumée.

22. Procédé selon la revendication 20, **caractérisé en ce qu'**il présente du dioxyde de titane.

23. Corps moulé, fabriqué selon l'une quelconque des revendications précédentes, **caractérisé en ce que** l'on utilise au moins un polyamide, qui est fabriqué par polycondensation d'oenantholactame, de caprylolactame, de pélargolactame ou de caprinolactame.

24. Corps moulé selon l'une quelconque des revendications précédentes, **caractérisé en ce qu'**il présente de la poudre de polyamide qui a été obtenue par cristallisation à précipitation.

25. Corps moulé selon l'une quelconque des revendications précédentes, **caractérisé en ce qu'**il présente de la poudre de polyamide qui a été obtenue par mouture.

26. Corps moulé selon l'une quelconque des revendications précédentes, **caractérisé en ce qu'**il présente un polyamide ayant une viscosité de solution comprise entre 1,4 et 2,1.

27. Corps moulé selon l'une quelconque des revendications précédentes, **caractérisé en ce qu'**il présente un polyamide ayant une viscosité de solution comprise entre 1,5 et 1,9.

28. Corps moulé selon l'une quelconque des revendications précédentes, **caractérisé en ce qu'**il présente un polyamide ayant une viscosité de solution comprise entre 1,6 et 1,7.

29. Corps moulé selon l'une quelconque des s précédentes, **caractérisé en ce qu'**il présente des adjuvants et/ou des charges.

30. Corps moulé selon l'une quelconque des revendications précédentes, **caractérisé en ce qu'**il présente en tant qu'adjuvant des agents de ruissellement.

31. Corps moulé selon l'une quelconque des revendications précédentes **caractérisé en ce qu'**il présente en tant que charge des particules de verre.

32. Corps moulé selon l'une quelconque des revendications précédentes, **caractérisé en ce qu'**il présente en tant qu'adjuvant des savons métalliques.

33. Procédé selon l'une quelconque des revendications précédentes, **caractérisé en ce qu'**il présente des pigments organiques et/ou inorganiques.

34. Corps moulé selon l'une quelconque des revendications précédentes, **caractérisé en ce qu'**il présente du noir de fumée.

35. Corps moulé selon l'une quelconque des revendications précédentes, **caractérisé en ce qu'**il présente de l'oxyde de titane.
